# EUROPEAN PATENT SPECIFICATION

(11) **EP 3 989 756 B1**
(45) Date of publication and mention of the grant of the patent: **18.12.2024**
(21) Application number: 21838966.6
(22) Date of filing: 07.09.2021
(51) Int. Cl.: A24F 40/50

(54) **AEROSOL GENERATING DEVICE AND METHOD FOR CONTROLLING POWER MODE THEREOF**
VORRICHTUNG ZUR AEROSOLERZEUGUNG UND VERFAHREN ZUR STEUERUNG IHRES LEISTUNGSMODUS
DISPOSITIF DE GÉNÉRATION D'AÉROSOL ET PROCÉDÉ DE COMMANDE DE SON MODE D'ALIMENTATION

(30) Priority: 07.09.2020 KR 20200113742; 23.06.2021 KR 20210081850
(43) Date of publication of application: 04.05.2022
(73) Proprietor: KT&G Corporation, Daedeok-gu Daejeon 34337 (KR)
(72) Inventor: LEE, Jaemin, Siheung-si Gyeonggi-do 15010 (KR)
(74) Representative: Ter Meer Steinmeister & Partner
(86) International application number: PCT/KR2021/012101
(87) International publication number: WO 2022/050812

(56) References cited:
- EP-A2- 3 372 098
- WO-A1-2016/096337
- WO-A1-2019/122344
- WO-A2-2012/109371
- KR-A- 20200 072 983
- KR-A- 20200 073 692
- KR-A- 20200 073 692
- US-A1- 2017 303 597

## Description

### Technical Field

Various embodiments of the present disclosure relate to an aerosol generating device, and more particularly, to aerosol generating device capable of preventing damage to a battery.

### Background Art

Recently, the demand for an alternative to a traditional combustive cigarette has increased. For example, there is growing demand for an aerosol generating device which generates an aerosol by heating an aerosol generating material included in a cigarette or a liquid storage without combustion. Known aerosol generating devices are known for example from documents WO2019/122344 and EP3372098.

### Disclosure of Invention

### Technical Problem

Generally, an aerosol generating device switches to a standby mode to save power unless it is performing operations such as heating the heater or displaying the remaining battery charge. While a standby mode is maintained, the voltage of a battery of the aerosol generating device may continuously decrease. If the battery voltage drops below a certain level, there is a risk of damage to the battery, which may result in reducing the life expectancy of the battery.

The present invention provides for an aerosol generating device capable of preventing damage of a battery.

Technical problems to be solved are not limited to the technical problems as described above, and other technical problems may be derived from the below embodiments.

### Solution to Problem

According to an aspect of the present invention, an aerosol generating device may include a battery; a power supply unit configured to control power supply of the battery; and a controller configured to, when a first mode switching condition is satisfied, control the power supply unit such that the aerosol generating device switches from a first power mode in which power is supplied to the controller to a second power mode in which no power is supplied to the controller.

According to another aspect of the present invention, a method of operating an aerosol generating device, the method may include supplying power corresponding to a first power mode to a controller from a battery; determining, by the controller, whether a first mode switching condition is satisfied; and, when the first mode switching condition is satisfied, blocking the power supplied to the controller.

According to another aspect of the present invention, there is provided a computer-readable recording medium having stored thereon a program for executing the method of operating an aerosol generating device.

### Advantageous Effects of Invention

According to various embodiments of the present invention, damage to a battery of the aerosol generating device may be prevented.

### Brief Description of Drawings

FIGS. 1 through 3 are diagrams showing examples in which a cigarette is inserted into an aerosol generating device.
FIGS. 4 and 5 are diagrams showing examples of a cigarette.
FIG. 6 is a diagram showing the overall configuration of an aerosol generating device according to an embodiment.
FIG. 7 is a block diagram showing an aerosol generating device according to an embodiment.
FIG. 8 is a flowchart of a method of operating an aerosol generating device according to an embodiment.
FIG. 9 is a flowchart of a method of operating an aerosol generating device according to another embodiment.
FIG. 10 is a circuit diagram for describing a method of controlling a power supply unit according to an embodiment.
FIG. 11 is a flowchart for describing a first mode switching condition and a second mode switching condition according to an embodiment.
FIG. 12 is a flowchart for describing a first mode switching condition and a second mode switching condition according to another embodiment.
FIG. 13 is a flowchart for describing a first mode switching condition and a second mode switching condition according to another embodiment.
FIG. 14 is a flowchart for describing a first mode switching condition and a second mode switching condition according to another embodiment.
FIG. 15 is a diagram referred to for description of FIGS. 9 to 14.

### Mode for the Invention

With respect to the terms in the various embodiments of the present disclosure, the general terms which are currently and widely used are selected in consideration of functions of structural elements in the various embodiments of the present disclosure. However, meanings of the terms may be changed according to intention, a judicial precedent, appearance of a new technology, and the like. In addition, in certain cases, there is also a term arbitrarily selected by the applicant, in which case the meaning will be described in detail in the description of one or more embodiments. Therefore, the terms used in one or more embodiments should be defined based on the meanings of the terms and the general contents of one or more embodiments, rather than simply the names of the terms.

In addition, unless explicitly described to the contrary, the word "comprise" and variations such as "comprises" or "comprising" will be understood to imply the inclusion of stated elements but not the exclusion of any other elements. In addition, the terms "-er", "-or", and "module" described in the specification mean units for processing at least one function and/or operation and can be implemented by hardware components or software components and combinations thereof.

As used herein, expressions such as "at least one of," when preceding a list of elements, modify the entire list of elements and do not modify the individual elements of the list. For example, the expression, "at least one of a, b, and c," should be understood as including only a, only b, only c, both a and b, both a and c, both b and c, or all of a, b, and c.

It will be understood that when an element or layer is referred to as being "over," "above," "on," "connected to" or "coupled to" another element or layer, it can be directly over, above, on, connected or coupled to the other element or layer or intervening elements or layers may be present. In contrast, when an element is referred to as being "directly over," "directly above," "directly on," "directly connected to" or "directly coupled to" another element or layer, there are no intervening elements or layers present. Like numerals refer to like elements throughout.

Hereinafter, exemplary embodiments of one or more embodiments will be described in detail with reference to the accompanying drawings. One or more embodiments may, however, be embodied in many different forms and should not be construed as being limited to the embodiments set forth herein.

Hereinafter, embodiments of one or more embodiments will be described in detail with reference to the drawings.

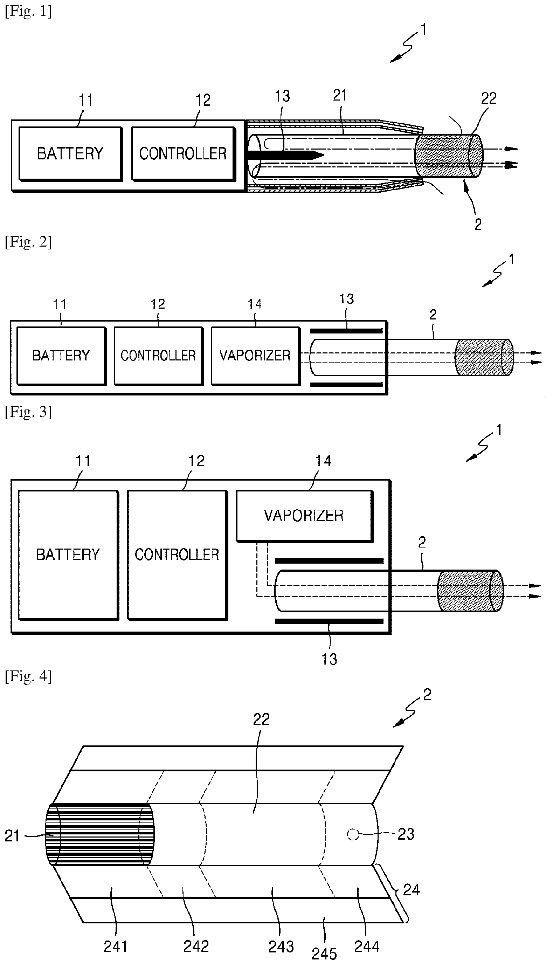

FIGS. 1 through 3 are diagrams showing examples in which a cigarette is inserted into an aerosol generating device.

Referring to FIG. 1, the aerosol generating device 1 may include a battery 11, a controller 12, and a heater 13. Referring to FIGS. 2 and 3, the aerosol generating device 1 may further include a vaporizer 14. Also, the aerosol generating article 2 may be inserted into an inner space of the aerosol generating device 1.

FIGS. 1 through 3 illustrate components of the aerosol generating device 1, which are related to the present embodiment. Therefore, it will be understood by one of ordinary skill in the art related to the present embodiment that other general-purpose components may be further included in the aerosol generating device 1, in addition to the components illustrated in FIGS. 1 through 3.

Also, FIGS. 2 and 3 illustrate that the aerosol generating device 1 includes the heater 13. However, as necessary, the heater 13 may be omitted.

FIG. 1 illustrates that the battery 11, the controller 12, and the heater 13 are arranged in series. Also, FIG. 2 illustrates that the battery 11, the controller 12, the vaporizer 14, and the heater 13 are arranged in series. Also, FIG. 3 illustrates that the vaporizer 14 and the heater 13 are arranged in parallel. However, the internal structure of the aerosol generating device 1 is not limited to the structures illustrated in FIGS. 1 through 3. In other words, according to the design of the aerosol generating device 1, the battery 11, the controller 12, the heater 13, and the vaporizer 14 may be differently arranged.

When the aerosol generating article 2 is inserted into the aerosol generating device 1, the aerosol generating device 1 may operate the heater 13 and/or the vaporizer 14 to generate aerosol. The aerosol generated by the heater 13 and/or the vaporizer 14 is delivered to a user by passing through the aerosol generating article 2.

As necessary, even when the aerosol generating article 2 is not inserted into the aerosol generating device 1, the aerosol generating device 1 may heat the heater 13.

The battery 11 may supply power to be used for the aerosol generating device 1 to operate. For example, the battery 11 may supply power to heat the heater 13 or the vaporizer 14, and may supply power for operating the controller 12. Also, the battery 11 may supply power for operations of a display, a sensor, a motor, etc. mounted in the aerosol generating device 1.

The controller 12 may generally control operations of the aerosol generating device 1. In detail, the controller 12 may control not only operations of the battery 11, the heater 13, and the vaporizer 14, but also operations of other components included in the aerosol generating device 1. Also, the controller 12 may check a state of each of the components of the aerosol generating device 1 to determine whether or not the aerosol generating device 1 is able to operate.

The controller 12 may include at least one processor. A processor can be implemented as an array of a plurality of logic gates or can be implemented as a combination of a general-purpose microprocessor and a memory in which a program executable in the microprocessor is stored. It will be understood by one of ordinary skill in the art that the processor can be implemented in other forms of hardware.

The heater 13 may be heated by the power supplied from the battery 11. For example, when the aerosol generating article 2 is inserted into the aerosol generating device 1, the heater 13 may be located outside the aerosol generating article 2. Thus, the heated heater 13 may increase a temperature of an aerosol generating material in the aerosol generating article 2.

The heater 13 may include an electro-resistive heater. For example, the heater 13 may include an electrically conductive track, and the heater 13 may be heated when currents flow through the electrically conductive track. However, the heater 13 is not limited to the example described above and may include all heaters which may be heated to a desired temperature. Here, the desired temperature may be pre-set in the aerosol generating device 1 or may be set by a user.

As another example, the heater 13 may include an induction heater. In detail, the heater 13 may include an electrically conductive coil for heating an aerosol generating article in an induction heating method, and the aerosol generating article may include a susceptor which may be heated by the induction heater.

For example, the heater 13 may include a tube-type heating element, a plate-type heating element, a needle-type heating element, or a rod-type heating element, and may heat the inside or the outside of the aerosol generating article 2, according to the shape of the heating element.

Also, the aerosol generating device 1 may include a plurality of heaters 13. Here, the plurality of heaters 13 may be inserted into the aerosol generating article 2 or may be arranged outside the aerosol generating article 2. Also, some of the plurality of heaters 13 may be inserted into the aerosol generating article 2 and the others may be arranged outside the aerosol generating article 2. In addition, the shape of the heater 13 is not limited to the shapes illustrated in FIGS. 1 through 3 and may include various shapes.

The vaporizer 14 may generate aerosol by heating a liquid composition and the generated aerosol may pass through the aerosol generating article 2 to be delivered to a user. In other words, the aerosol generated via the vaporizer 14 may move along an air flow passage of the aerosol generating device 1 and the air flow passage may be configured such that the aerosol generated via the vaporizer 14 passes through the aerosol generating article 2 to be delivered to the user.

For example, the vaporizer 14 may include a liquid storage, a liquid delivery element, and a heating element, but it is not limited thereto. For example, the liquid storage, the liquid delivery element, and the heating element may be included in the aerosol generating device 1 as independent modules.

The liquid storage may store a liquid composition. For example, the liquid composition may be a liquid including a tobacco-containing material having a volatile tobacco flavor component, or a liquid including a non-tobacco material. The liquid storage may be formed to be detachable from the vaporizer 14 or may be formed integrally with the vaporizer 14.

For example, the liquid composition may include water, a solvent, ethanol, plant extract, spices, flavorings, or a vitamin mixture. The spices may include menthol, peppermint, spearmint oil, and various fruit-flavored ingredients, but are not limited thereto. The flavorings may include ingredients capable of providing various flavors or tastes to a user. Vitamin mixtures may be a mixture of at least one of vitamin A, vitamin B, vitamin C, and vitamin E, but are not limited thereto. Also, the liquid composition may include an aerosol forming substance, such as glycerin and propylene glycol.

The liquid delivery element may deliver the liquid composition of the liquid storage to the heating element. For example, the liquid delivery element may be a wick such as cotton fiber, ceramic fiber, glass fiber, or porous ceramic, but is not limited thereto.

The heating element is an element for heating the liquid composition delivered by the liquid delivery element. For example, the heating element may be a metal heating wire, a metal hot plate, a ceramic heater, or the like, but is not limited thereto. In addition, the heating element may include a conductive filament such as nichrome wire and may be positioned as being wound around the liquid delivery element. The heating element may be heated by a current supply and may transfer heat to the liquid composition in contact with the heating element, thereby heating the liquid composition. As a result, aerosol may be generated.

For example, the vaporizer 14 may be referred to as a cartomizer or an atomizer, but it is not limited thereto.

The aerosol generating device 1 may further include general-purpose components in addition to the battery 11, the controller 12, the heater 13, and the vaporizer 14. For example, the aerosol generating device 1 may include a display capable of outputting visual information and/or a motor for outputting haptic information. Also, the aerosol generating device 1 may include at least one sensor (e.g., a puff sensor, a temperature sensor, an aerosol generating article insertion detecting sensor, etc.). Also, the aerosol generating device 1 may be formed as a structure that, even when the aerosol generating article 2 is inserted into the aerosol generating device 1, may introduce external air or discharge internal air.

Although not illustrated in FIGS. 1 through 3, the aerosol generating device 1 and an additional cradle may form together a system. For example, the cradle may be used to charge the battery 11 of the aerosol generating device 1. Alternatively, the heater 13 may be heated when the cradle and the aerosol generating device 1 are coupled to each other.

The aerosol generating article 2 may be similar to a general combustive cigarette. For example, the aerosol generating article 2 may be divided into a first portion including an aerosol generating material and a second portion including a filter, etc. Alternatively, the second portion of the aerosol generating article 2 may also include an aerosol generating material. For example, an aerosol generating material made in the form of granules or capsules may be inserted into the second portion.

The entire first portion may be inserted into the aerosol generating device 1, and the second portion may be exposed to the outside. Alternatively, only a portion of the first portion may be inserted into the aerosol generating device 1, or the entire first portion and a portion of the second portion may be inserted into the aerosol generating device 1. The user may puff aerosol while holding the second portion by the mouth of the user. In this case, the aerosol is generated by the external air passing through the first portion, and the generated aerosol passes through the second portion and is delivered to the user's mouth.

For example, the external air may flow into at least one air passage formed in the aerosol generating device 1. For example, opening and closing of the air passage and/ or a size of the air passage formed in the aerosol generating device 1 may be adjusted by the user. Accordingly, the amount of smoke and a smoking impression may be adjusted by the user. As another example, the external air may flow into the aerosol generating article 2 through at least one hole formed in a surface of the aerosol generating article 2.

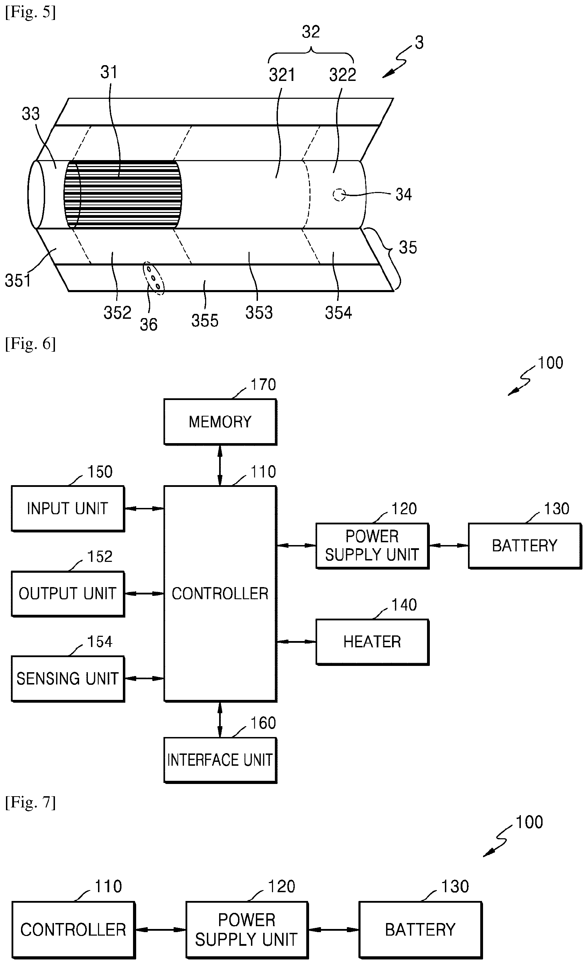

Hereinafter, the examples of the aerosol generating article 2 will be described with reference to FIGS. 4 and 5.

FIGS. 4 and 5 illustrate examples of the aerosol generating article.

Referring to FIG. 4, the aerosol generating article 2 may include a tobacco rod 21 and a filter rod 22. The first portion described above with reference to FIGS. 1 through 3 may include the tobacco rod 21, and the second portion may include the filter rod 22.

FIG. 4 illustrates that the filter rod 22 includes a single segment. However, the filter rod 22 is not limited thereto. In other words, the filter rod 22 may include a plurality of segments. For example, the filter rod 22 may include a first segment configured to cool an aerosol and a second segment configured to filter a certain component included in the aerosol. Also, as necessary, the filter rod 22 may further include at least one segment configured to perform other functions.

The aerosol generating article 2 may be packaged using at least one wrapper 24. The wrapper 24 may have at least one hole through which external air may be introduced or internal air may be discharged. For example, the aerosol generating article 2 may be packaged by one wrapper 24. As another example, the aerosol generating article 2 may be double-packaged by two or more wrappers 24. For example, the tobacco rod 21 may be packaged by a first wrapper 241, and the filter rod 22 may be packaged by wrappers 242, 243, 244. Also, the entire aerosol generating article 2 may be re-packaged by another single wrapper 245. When the filter rod 22 includes a plurality of segments, each segment may be individually packaged by wrappers 242, 243, 244.

The tobacco rod 21 may include an aerosol generating material. For example, the aerosol generating material may include at least one of glycerin, propylene glycol, ethylene glycol, dipropylene glycol, diethylene glycol, triethylene glycol, tetraethylene glycol, and oleyl alcohol, but it is not limited thereto. Also, the tobacco rod 21 may include other additives, such as flavors, a wetting agent, and/or organic acid. Also, the tobacco rod 21 may include a flavored liquid, such as menthol or a moisturizer, which is injected to the tobacco rod 21.

The tobacco rod 21 may be manufactured in various forms. For example, the tobacco rod 21 may be formed as a sheet or a strand. Also, the tobacco rod 21 may be formed as a pipe tobacco, which is formed of tiny bits cut from a tobacco sheet. Also, the tobacco rod 21 may be surrounded by a heat conductive material. For example, the heat-conducting material may be, but is not limited to, a metal foil such as aluminum foil. For example, the heat conductive material surrounding the tobacco rod 21 may uniformly distribute heat transmitted to the tobacco rod 21, and thus, the heat conductivity applied to the tobacco rod may be increased and taste of the tobacco may be improved. Also, the heat conductive material surrounding the tobacco rod 21 may function as a susceptor heated by the induction heater. Here, although not illustrated in the drawings, the tobacco rod 21 may further include an additional susceptor, in addition to the heat conductive material surrounding the tobacco rod 21.

The filter rod 22 may include a cellulose acetate filter. Shapes of the filter rod 22 are not limited. For example, the filter rod 22 may include a cylinder-type rod or a tube-type rod having a hollow inside. Also, the filter rod 22 may include a recess-type rod. When the filter rod 22 includes a plurality of segments, at least one of the plurality of segments may have a different shape.

Also, the filter rod 22 may include at least one capsule 23. Here, the capsule 23 may generate a flavor or an aerosol. For example, the capsule 23 may have a configuration in which a liquid containing a flavoring material is wrapped with a film. For example, the capsule 23 may have a spherical or cylindrical shape, but is not limited thereto.

Referring to FIG. 5, the aerosol generating article 3 may further include a front-end plug 33. The front-end plug 33 may be located on one side of the tobacco rod 31 which is not facing the filter rod 32. The front-end plug 33 may prevent the tobacco rod 31 from being detached from the filter rod 32 and prevent the liquefied aerosol from flowing from the tobacco rod 31 into the aerosol generating device (1 of FIGS. 1 through 3), during smoking.

The filter rod 32 may include a first segment 321 and a second segment 322. Here, the first segment 321 may correspond to the first segment of the filter rod 22 of FIG. 4, and the second segment 322 may correspond to the second segment of the filter rod 22 of FIG. 4.

A diameter and a total length of the aerosol generating article 3 may correspond to a diameter and a total length of the aerosol generating article 2 of FIG. 4. For example, the length of The front-end plug 33 is about 7 mm, the length of the tobacco rod 31 is about 15 mm, the length of the first segment 321 is about 12 mm, and the length of the second segment 322 is about 14 mm, but it is not limited thereto.

The aerosol generating article 3 may be packaged using at least one wrapper 35. The wrapper 35 may have at least one hole through which external air may be introduced or internal air may be discharged. For example, the front end plug 33 may be packaged by a first wrapper 351, the tobacco rod 31 may be packaged by a second wrapper 352, the first segment 321 may be packaged by a third wrapper 353, and the second segment 322 may be packaged by a fourth wrapper 354. Further, the entire aerosol generating article 3 may be repackaged by a fifth wrapper 355.

In addition, at least one perforation 36 may be formed in the fifth wrapper 355. For example, the perforation 36 may be formed in a region surrounding the tobacco rod 31, but is not limited thereto. The perforation 36 may serve to transfer heat generated by the heater 13 illustrated in FIGS. 2 and 3 to the inside of the tobacco rod 31.

In addition, at least one capsule 34 may be included in the second segment 322. Here, the capsule 34 may generate a flavor or an aerosol. For example, the capsule 34 may have a configuration in which a liquid containing a flavoring material is wrapped with a film. For example, the capsule 34 may have a spherical or cylindrical shape, but is not limited thereto.

FIG. 6 is a diagram showing the overall configuration of an aerosol generating device according to an embodiment.

Referring to FIG. 6, an aerosol generating device 100 may include a controller 110, a power supply unit 120, a battery 130, a heater 140, an input unit 150, an output unit 152, a sensing unit 154, an interface unit 160, and a memory 170. The aerosol generating device 100 of FIG. 6 may correspond to the aerosol generating device 1 of FIGS. 1 to 3. Also, the battery 130 of FIG. 6 may correspond to the battery 11 of FIG. 3, and the controller 110 of FIG. 6 may correspond to the controller 12 of FIG. 3.

The input unit 150 may receive a user input. For example, the input unit 150 may be provided in the form of a button, but is not limited thereto.

When a user input is received, the input unit 150 may transmit a control signal corresponding to the user input to the controller 110. The controller 110 may control the internal components of the aerosol generating device 100 based on a control signal. For example, the controller 110 may heat the heater 140 or control the output unit 152 to display a remaining battery, based on a control signal.

The output unit 152 may output visual information and/or tactile information related to the aerosol generating device 100. In an embodiment, the output unit 152 may include a display (not shown), a vibrating motor (not shown), etc.

The sensing unit 154 may collect information related to the operation of the aerosol generating device 100. In an embodiment, the sensing unit 154 may measure a temperature of the heater 140. In another embodiment, the sensing unit 154 may sense a puff of a user. In another embodiment, the sensing unit 154 may sense insertion of an aerosol-generating article. To this end, the sensing unit 154 may include a temperature sensor (not shown), a puff sensor (not shown), a cigarette insertion sensor (not shown), etc.

The interface unit 160 may serve as a path for communicating with various external devices connected to the aerosol generating device 100. For example, the interface unit 160 may include a port that may be connected to an external device, and the aerosol generating device 100 may be connected to the external device through the port. The aerosol generating device 100 may exchange data with an external device while being connected to the external device.

The interface unit 160 may also serve as a path for receiving external power. For example, the interface unit 160 may include a port that may be connected to an external power supply, and the aerosol generating device 100 may receive power supply from the external power supply while being connected to the external power supply.

The heater 140 may be an electrically resistive heater or an induction heater. In an embodiment, when the heater 140 is an electrically resistive heater, the heater 140 may include an electro-conductive track. The heater 140 may be heated by a current applied to the electro-conductive track. In an embodiment, when the heater 140 is an induction heater, the heater 140 may include an electro-conductive coil and a susceptor. When a current is applied to the electro-conductive coil, the susceptor may be heated by a variable magnetic field formed by the electro-conductive coil.

The battery 130 may supply power to the internal components of the aerosol generating device 100 under the control of the controller 110. The battery 130 may be, but is not limited to, a lithium-ion battery.

The power supply unit 120 may transmit power generated by the battery 130 to the controller 110, based on a power mode. In other words, the power supply unit 120 may supply power to the controller 110 based on a power mode of the aerosol generating device 100. In an embodiment, the power supply unit 120 may be a component included in the controller 110.

The memory 170 may store information for the operation of the aerosol generating device 100. For example, the memory 170 may store information regarding various switching conditions set between a plurality of power modes.

FIG. 7 is a block diagram of an aerosol generating device according to an embodiment.

Referring to FIG. 7, the aerosol generating device 100 may include the controller 110, the power supply unit 120, and the battery 130.

The power supply unit 120 may supply power to the controller 110 based on a power mode. The power mode may include a first power mode and a second power mode in which less power is consumed than in the first power mode.

According to the invention, the first power mode is a standby mode. The standby mode refers to a mode in which power required for operations of internal components other than the controller 110 is blocked, and the standby mode of the present disclosure is not limited by its name. For example, the standby mode may be referred to as a power saving mode, a sleep mode, etc.

According to the invention, the second power mode is a ship mode. The ship mode refers to a mode in which power supplied to the controller 110 is blocked. The ship mode of the present disclosure is not limited by its name. For example, the ship mode maybe referred to as a factory shipping mode, a shutdown mode, etc.

The controller 110 may set the power mode of the aerosol generating device 100 to the first power mode when a switching condition to the first power mode is satisfied. In an embodiment, the switching condition to the first power mode may include a task completion condition. For example, the controller 110 may set the power mode of the aerosol generating device 100 to the first power mode when heating of a heater (e.g., the heater 140 of FIG. 1) is completed according to a temperature profile. In another example, when remaining battery charge is displayed according to a user input, the controller 110 may set the power mode of the aerosol generating device 100 to the first power mode, thereby significantly reducing power consumption of the battery 130.

Even while the aerosol generating device 100 is operating in the first power mode (e.g., the standby mode), power may be supplied to certain components for waking up the aerosol generating device 100, such as the controller 110. Therefore, the remaining charge in the battery 130 may be drained over time, resulting in decreasing the voltage of the battery. When the voltage of the battery 130 decreases below a predetermined level, the battery cells may be damaged. Also, solidification of a battery electrolyte may progress, and the full-charge capacity may be significantly reduced.

To resolve the problems, when a predetermined condition is satisfied, the power mode of the aerosol generating device 100 may be switched to a second power mode in which less power is supplied from the battery 130 than in the first power mode (e.g., standby mode) or power is not supplied at all from the battery 130.

In detail, the controller 110 may change the power mode of the aerosol generating device 100 from the first power mode to the second power mode based on whether a first mode switching condition is met. In an embodiment, the first mode switching condition may be related to at least one of heating of the heater 140, insertion of an aerosol-generating article, reception of a user input, and supply of external power.

For example, when heating of the heater 140 is not performed during a first time period, the controller 110 may determine that the first mode switching condition is satisfied and change the power mode of the aerosol generating device 100 from the first power mode to the second power mode.

In another example, when insertion of an aerosol-generating article is not sensed during a second time period, the controller 110 may determine that the first mode switching condition is satisfied and change the power mode of the aerosol generating device 100 from the first power mode to the second power mode.

In another example, when no user input is received during a third time period, the controller 110 may change the power mode of the aerosol generating device 100 from the first power mode to the second power mode. The third time period may be longer than the first time period and the second time period.

In another example, if the remaining charge of the battery 130 is below a pre-set level and no external power is supplied during a fourth time period, the controller 110 may change the power mode of the aerosol generating device 100 from the first power mode to the second power mode. The fourth time period may be longer than the third time period.

In an embodiment, as the controller 110 switches the power mode of the aerosol generating device 100 from the first power mode to the second power mode based on a first mode switching condition, power supply from the power supply unit 120 may be limited. As a result, damage to the battery 130 may be significantly reduced.

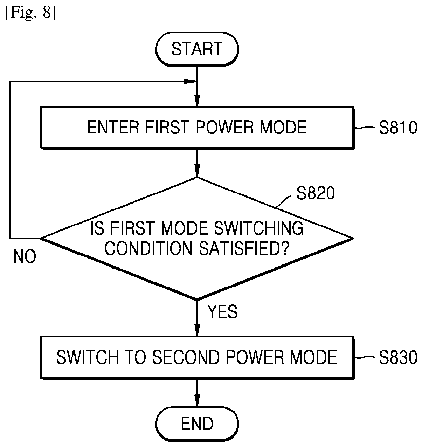

FIG. 8 is a flowchart of a method of operating an aerosol generating device according to an embodiment.

Referring to FIG. 8, in operation S810, a controller (e.g., the controller 110 of FIG. 6) may enter the first power mode. For example, when a task completion condition is satisfied, the controller 110 may enter the first power mode (e.g., standby mode). In the first power mode, the controller 110 may receive power from a battery (e.g., the battery 130 of FIG. 6) and block power supplied to other internal components of an aerosol generating device (e.g., the aerosol generating device 100 of FIG. 6).

In operation S820, the controller 110 may determine whether a first mode switching condition is satisfied. The first mode switching condition may refer to a condition that is required to be met for the power mode of the aerosol generating device 100 to switch from the first power mode (e.g., standby mode) to the second power mode (e.g., ship mode). In an embodiment, the controller 110 may determine whether at least one of heating of a heater (e.g., the heater 140 of FIG. 6), insertion of an aerosol-generating article, reception of a user input, and supply of external power is satisfied.

When the first mode switching condition is not satisfied, the controller 110 may maintain the first power mode of the aerosol generating device 100.

In operation S830, when the first mode switching condition is satisfied, the controller 110 may change the power mode of the aerosol generating device 100 from the first power mode to the second power mode. In an embodiment, as the power mode of the aerosol generating device 100 is switched to the second power mode, power supplied from a power supply unit (e.g., the power supply unit 120 of FIG. 6) to the controller 110 may be blocked.

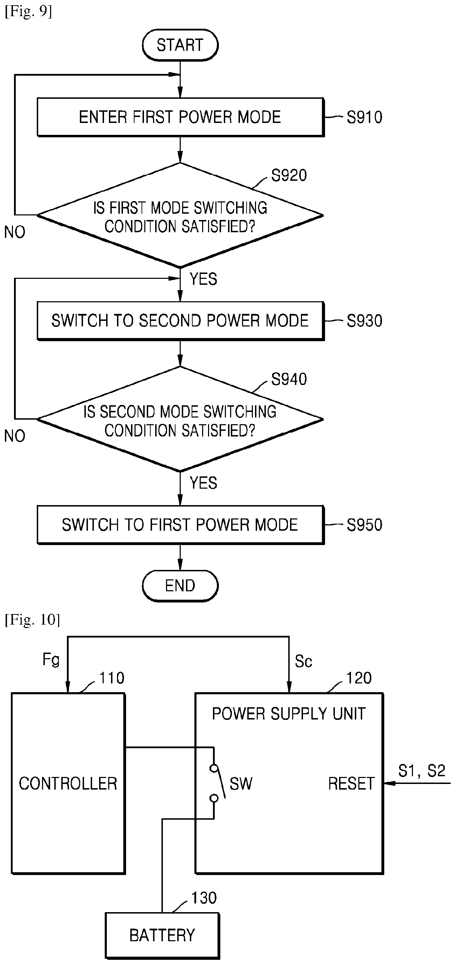

FIG. 9 is a flowchart of a method of operating an aerosol generating device according to another embodiment. FIG. 10 is a circuit diagram for describing a method of controlling a power supply unit according to an embodiment.

Referring to FIG. 9, in operation S910, the controller 110 may enter the first power mode. For example, when a task completion condition is satisfied, the controller 110 may enter the first power mode (e.g., standby mode).

In operation S920, the controller 110 may determine whether a first mode switching condition is satisfied. For example, the controller 110 may determine whether at least one of heating of the heater 140, insertion of an aerosol-generating article, reception of a user input, and supply of external power is satisfied.

If the first mode switching condition is not satisfied, the controller 110 may maintain the first power mode of the aerosol generating device.

When the first mode switching condition is satisfied, in operation S930, the controller 110 may change the power mode of the aerosol generating device 100 from the first power mode to the second power mode (e.g., ship mode).

Referring to FIG. 10, for example, when a heater (e.g., the heater 140 of FIG. 6) is not heated during the first time period, the controller 110 may transmit a switching control signal Sc to the power supply unit 120. For example, the first time period may be 24 hours (i.e., 1 day). The power supply unit 120 may turn off a switching element SW based on the switching control signal Sc. Therefore, power supplied to the controller 110 may be blocked.

As another example, when insertion of an aerosol-generating article is not sensed during the second time period, the controller 110 may transmit the switching control signal Sc to the power supply unit 120. For example, the second time period may be 24 hours (i.e., 1 day). The power supply unit 120 may turn off a switching element SW based on the switching control signal Sc. Therefore, power supplied to the controller 110 may be blocked.

As another example, when no user input is received during the third time period, the controller 110 may transmit the switching control signal Sc to the power supply unit 120. For example, the third time period may be 48 hours (i.e., 2 days). The power supply unit 120 may turn off a switching element SW based on the switching control signal Sc. Therefore, power supplied to the controller 110 may be blocked.

As another example, when the remaining charge Fg of the battery 130 is below a pre-set level and no external power is supplied during the fourth time period, the controller 110 may transmit the switching control signal Sc to the power supply unit 120. For example, the fourth time period may be 168 hours (i.e., 7 days). The power supply unit 120 may turn off a switching element SW based on the switching control signal Sc such that no power is supplied to the controller 110.

In an embodiment, information about the remaining charge Fg of the battery 130 may be provided by the power supply unit 120. For example, in response to a request of the controller 110, the power supply unit 120 may transmit information about the remaining charge Fg of the battery 130 to the controller 110.

Referring back to FIG. 9, in operation S940, the power supply unit 120 may determine whether a second mode switching condition is satisfied. The second mode switching condition may refer to a condition that is required to be satisfied for the aerosol generating device 100 to switch from the second power mode (e.g., ship mode) to the first power mode (e.g., standby mode). In an embodiment, the power supply unit 120 may determine whether at least one of reception of a user input and supply of external power is satisfied.

If the second mode switching condition is not satisfied, the power supply unit 120 may maintain the power mode of the aerosol generating device 100 in the second power mode, which is the ship mode.

When the second mode switching condition is satisfied, in operation S950, the power supply unit 120 may change the power mode of the aerosol generating device 100 from the second power mode to the first power mode.

In FIG. 10, a user input signal S1 and/or an external power signal S2 may be input to a reset terminal of the power supply unit 120. These signals may be referred to as a reset signal. When the power supply unit 120 receives a reset signal, the power supply unit 120 may turn on the switching element SW and start to supply power to the controller 110. Therefore, the aerosol generating device 100 is released from the second power mode (e.g., ship mode), and may re-enter the first power mode (e.g., standby mode).

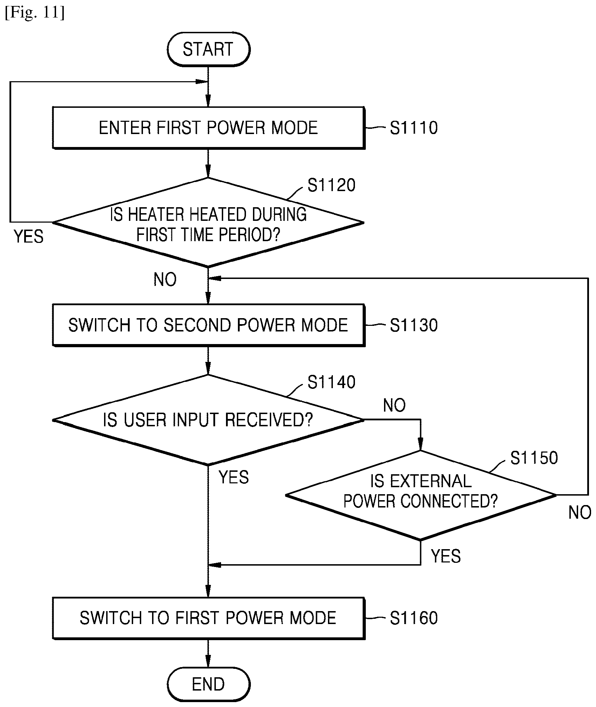

FIG. 11 is a flowchart for describing a first mode switching condition and a second mode switching condition according to an embodiment.

Referring to FIG. 11, in operation S1110, a controller (e.g., the controller 110 of FIG. 6) may enter the first power mode when a task completion condition is satisfied. For example, the controller 110 may change the power mode of the aerosol generating device 100 to the first power mode (e.g., standby mode), when heating of a heater (e.g., the heater 140 of FIG. 6) is completed according to a temperature profile. In another example, when remaining battery charge is displayed according to a user input, the controller 110 may change the power mode of the aerosol generating device 100 to the first power mode.

In operation S1120, the controller 110 may determine whether a condition of heating of the heater 140 is satisfied. For example, if the heater 140 is ever heated during the first time period, the controller 110 may maintain the first power mode. The first time period may be 24 hours (i.e., 1 day).

When the heater 140 is not heated during the first time period, in operation S1130, the controller 110 may change the power mode of the aerosol generating device 100 from the first power mode to the second power mode (e.g., ship mode).

In operation S1140, the controller 110 may determine whether a user input is received in the second power mode. For example, the controller 110 may determine whether a user input is received via a physical button (e.g., a power button) of the aerosol generating device 100.

According to an embodiment, when a user input is received in the second power mode, in operation S1160, the controller 110 may change the power mode of the aerosol generating device 100 from the second power mode to the first power mode.

According to an embodiment, when no user input is received in the second power mode, in operation S1150, the controller 110 may determine whether the aerosol generating device 100 is connected to an external power supply. For example, the controller 110 may determine whether external power has been supplied through an interface unit (e.g., the interface unit 160 of FIG. 6) of the aerosol generating device 100.

According to an embodiment, when the aerosol generating device 100 is connected to an external power supply in the second power mode, in operation S1160, the controller 110 may change the power mode of the aerosol generating device 100 from the second power mode to the first power mode.

According to an embodiment, if the aerosol generating device 100 is not connected to an external power supply in the second power mode, in operation S1130, the controller 110 may maintain the second power mode (e.g., ship mode).

Although FIG. 11 shows that operation S1140 and operation S1150 are sequentially performed, it is merely for convenience of explanation, and the present disclosure is not limited thereto. In another embodiment, operation S1140 and operation S1150 may be performed in parallel or may be formed in the order of operation S1150 and operation S1140.

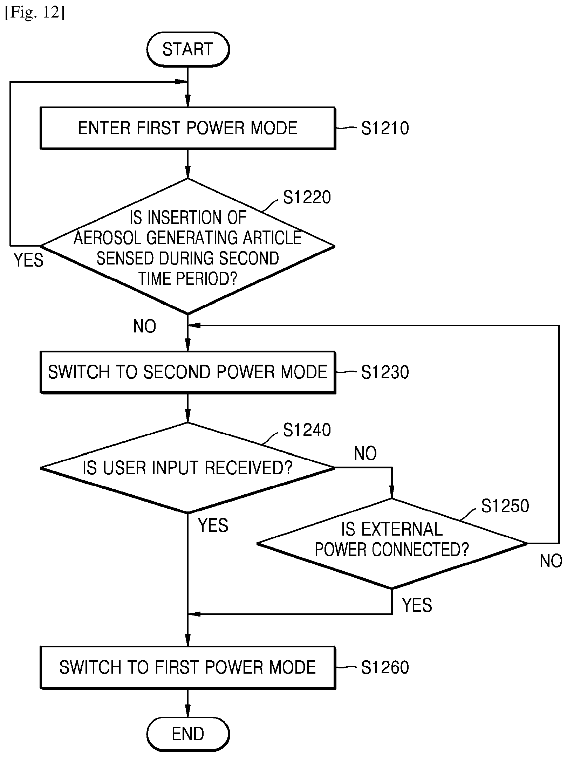

FIG. 12 is a flowchart for describing a first mode switching condition and a second mode switching condition according to another embodiment. Operations S1230 to S1260 of FIG. 12 correspond to operations S1130 to S1160 of FIG. 11, respectively. Therefore, descriptions corresponding or identical to descriptions given above with reference to FIG. 11 will be omitted below.

Referring to FIG. 12, in operation S1210, a controller (e.g., the controller 110 of FIG. 6) may enter the first power mode when a task completion condition is satisfied.

In operation S1220, the controller 110 may determine whether a condition of insertion of an aerosol-generating article is satisfied. When insertion of an aerosol-generating article is sensed by a sensing unit (e.g., the sensing unit 154 of FIG. 6) during the second time period, the controller 110 may maintain the first power mode. The second time period may be 24 hours (i.e., 1 day).

When insertion of an aerosol-generating article has not detected through the sensing unit 154 during the second time period, the controller 110 may change the power mode of the aerosol generating device 100 from the first power mode (e.g., standby mode) to the second power mode (e.g., ship mode).

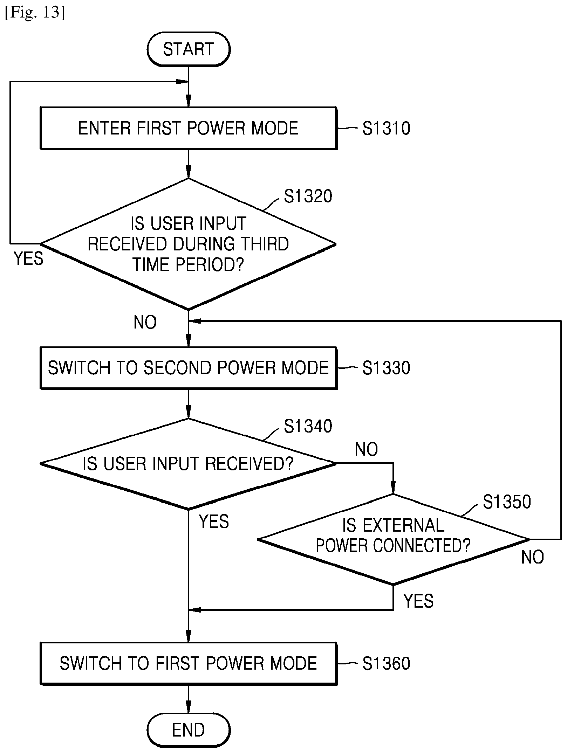

FIG. 13 is a flowchart for describing a first mode switching condition and a second mode switching condition according to another embodiment. Operations S1330 to S1360 of FIG. 13 correspond to operations S1130 to S1160 of FIG. 11, respectively. Therefore, descriptions corresponding or identical to descriptions given above with reference to FIG. 11 will be omitted below.

Referring to FIG. 13, in operation S1310, a controller (e.g., the controller 110 of FIG. 6) may enter the first power mode when a task completion condition is satisfied.

In operation S1320, the controller 110 may determine whether a condition of reception of a user input through an input unit (e.g., the input unit 150 of FIG. 6) is satisfied. When a user input is received through the input unit 150 during the third time period, the controller 110 may maintain the first power mode. The third time period may be 48 hours (i.e., 2 days). Here, the user input may refer to an input other than an input that triggers a normal power mode of the aerosol generating device 100, such as a heating command for heating a heater (e.g., the heater 140 of FIG. 6). For example, the user input may refer to a command for displaying the remaining battery charge.

When no user input has been received through the input unit 150 during the third time period, the controller 110 may change the power mode of the aerosol generating device 100 from the first power mode (e.g., standby mode) to the second power mode (e.g., ship mode).

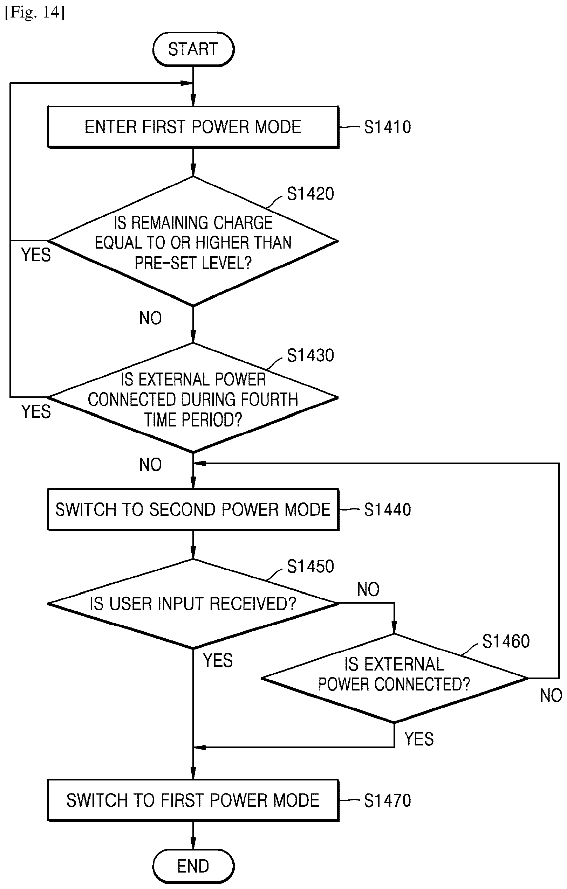

FIG. 14 is a flowchart for describing a first mode switching condition and a second mode switching condition according to another embodiment. Operations S1440 to S1470 of FIG. 14 correspond to operations S1130 to S1160 of FIG. 11, respectively. Therefore, descriptions corresponding or identical to descriptions given above with reference to FIG. 11 will be omitted below.

Referring to FIG. 14, in operation S1410, a controller (e.g., the controller 110 of FIG. 6) may enter the first power mode when a task completion condition is satisfied.

In operation S1420, after entering the first power mode, the controller 110 may determine whether the remaining charge of a battery (e.g., the battery 130 of FIG. 6) is equal to or higher than a pre-set level. In an embodiment, the pre-set level may be 5% of the full capacity of the battery 130. In another embodiment, the pre-set level may correspond to a reference output voltage of the battery 130. For example, the reference output voltage may be set between 2.7 V and 3.25 V.

When the remaining charge of the battery 130 is equal to or higher than the pre-set level, the controller 110 may maintain the power mode of the aerosol generating device 100 in the first power mode.

When the remaining charge of the battery 130 is below the pre-set level, in operation S1430, the controller 110 may determine whether an external power supply has been connected during the fourth time period. The fourth time period may be 168 hours (7 days).

When the remaining charge of the battery 130 is below the pre-set level and an external power supply has been connected during the fourth time period, the controller 110 may maintain the first power mode.

When the remaining charge of the battery 130 is below the pre-set level and an external power supply has not been connected during the fourth time period, the controller 110 may change the power mode of the aerosol generating device 100 from the first power mode (e.g., standby mode) to the second power mode (e.g., ship mode).

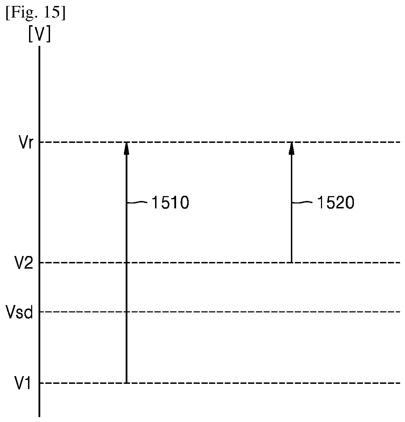

FIG. 15 is a diagram referred to for description of FIGS. 9 to 14.

In detail, FIG. 15 is a diagram for describing the effect of the present disclosure due to switching to the second power mode.

Referring to FIG. 15, if an aerosol generating device (e.g., the aerosol generating device 100 of FIG. 6) operates only in the first power mode (e.g., standby mode), the output voltage (i.e., remaining charge) of a battery (e.g., the battery 130 of FIG. 6) may decrease to a first voltage V1 as indicated by a first graph 1510. Since the first voltage V1 is lower than a first reference voltage Vsd at which battery cells are damaged, when the capacity of the battery 130 decreases to the first voltage V1, the battery 130 may be seriously damaged. Also, when the aerosol generating device 100 operates only in the first power mode, the output voltage of the battery 130 decreases to the first voltage V1, and thus the time for charging the battery to a second reference voltage Vr, which is the minimum threshold voltage for heating a heater (e.g., the heater 140 of FIG. 6), may increase.

On the other hand, according to an embodiment, when a pre-set condition is satisfied in the first power mode (e.g., standby mode), the aerosol generating device 100 may switch to the second power mode (e.g., ship mode). Therefore, the output voltage of the battery 130 may not decrease below a second voltage V2 as indicated by a second graph 1520. The second voltage V2 is higher than the first reference voltage Vsd at which battery cells are damaged, and thus the battery 130 may be prevented from being damaged. Also, the time for charging the battery to the second reference voltage Vr may be reduced.

At least one of the components, elements or units represented by a block as illustrated in FIGS. 1-3, 6-7, and 10, such as the controller 110, may be embodied as various numbers of hardware, software and/or firmware structures that execute respective functions described above, according to an exemplary embodiment. For example, at least one of these components, elements or units may use a direct circuit structure, such as a memory, processing, logic, a look-up table, etc. that may execute the respective functions through controls of one or more microprocessors or other control apparatuses. Also, at least one of these components, elements or units may be specifically embodied by a module, a program, or a part of code, which contains one or more executable instructions for performing specified logic functions. Also, at least one of these components, elements or units may further include a processor such as a central processing unit (CPU) that performs the respective functions, a microprocessor, or the like. Further, although a bus is not illustrated in the above block diagrams, communication between the components, elements or units may be performed through the bus. Functional aspects of the above exemplary embodiments may be implemented in algorithms that execute on one or more processors. Furthermore, the components, elements or units represented by a block or processing steps may employ any number of related art techniques for electronics configuration, signal processing and/or control, data processing and the like.

Those of ordinary skill in the art pertaining to the present embodiments can understand that various changes in form and details can be made therein without departing from the scope of the appended claims. The disclosed methods should be considered in a descriptive sense only and not for purposes of limitation. The scope of the present disclosure is defined by the appended claims rather than by the foregoing description.

## Claims

1. An aerosol generating device (100) comprising:
a battery (130);
a power supply unit (120) configured to control power supply of the battery (130); and
a controller (110) configured to, when a first mode switching condition is satisfied, control the power supply unit (120) such that the aerosol generating device (100) switches from a first power mode in which power is supplied to the controller (110) to a second power mode in which no power is supplied to the controller (110), **characterised in that**
the first power mode is a standby mode being a power saving mode, and the second power mode is a ship mode being a mode in which power supplied to the controller (110) is blocked.

2. The aerosol generating device (100) of claim 1, wherein the first mode switching condition comprises at least one of heating of a heater (140), insertion of an aerosol-generating article (2), reception of a user input, and supply of external power, during a designated time period.

3. The aerosol generating device (100) of claim 1, further comprising a heater (140) configured to heat an aerosol-generating article (2),
wherein, when heating of the heater (140) is not performed during a first time period, the controller (110) switches to the second power mode.

4. The aerosol generating device of claim 1, further comprising an insertion sensing unit configured to sense insertion of an aerosol-generating article (2),
wherein, when insertion of the aerosol-generating article (2) is not sensed by the insertion sensing unit during a second time period, the controller (110) switches to the second power mode.

5. The aerosol generating device (100) of claim 1, further comprising an input unit (150) configured to receive a user input,
wherein, when no user input is received through the input unit (150) during a third time period, the controller (110) switches to the second power mode.

6. The aerosol generating device (100) of claim 1, further comprising an interface unit (160) configured to receive external power,
wherein, when remaining charge of the battery (130) is below a pre-set level and the external power is not supplied during a fourth time period, the controller (110) switches to the second power mode.

7. The aerosol generating device (100) of claim 1, wherein, when a second mode switching condition is satisfied while no power is supplied to the controller (110), the power supply unit (120) switches to the first power mode.

8. The aerosol generating device (100) of claim 7, wherein the second mode switching condition comprises at least one of reception of a user input and supply of external power.

9. A method of operating an aerosol generating device (100), the method comprising:
supplying power corresponding to a first power mode to a controller (110) from a battery (130), wherein the first power mode is a standby mode being a power saving mode;
determining, by the controller (110), whether a first mode switching condition is satisfied; **characterised in that**
when the first mode switching condition is satisfied, switching from the first power mode to a second power mode being a ship mode in which power supplied to the controller (110) is blocked.

10. A computer-readable recording medium having stored thereon a program for executing the method of claim 9 on a device according to anyone of the claims 1-8.

## Patentansprüche

1. Aerosolerzeugende Vorrichtung (100), die Folgendes umfasst:
eine Batterie (130);
eine Leistungsversorgungseinheit (120), die konfiguriert ist, die Leistungsversorgung der Batterie (130) zu steuern; und
eine Steuereinrichtung (110), die konfiguriert ist, dann, wenn eine erste Betriebsartumschaltbedingung erfüllt ist, die Leistungsversorgungseinheit (120) derart zu steuern, dass die aerosolerzeugende Vorrichtung (100) von einer ersten Leistungsbetriebsart, in der die Steuereinrichtung (110) mit Leistung versorgt wird, in eine zweite Leistungsbetriebsart, in der die Steuereinrichtung (110) nicht mit Leistung versorgt wird, schaltet, **dadurch gekennzeichnet, dass**
die erste Leistungsbetriebsart eine Bereitschaftsbetriebsart ist, die eine Leistungssparbetriebsart ist, und die zweite Leistungsbetriebsart eine Transportbetriebsart ist, in der die Leistungsversorgung der Steuereinrichtung (110) blockiert wird.

2. Aerosolerzeugende Vorrichtung (100) nach Anspruch 1, wobei die erste Betriebsartumschaltbedingung das Erhitzen einer Heizvorrichtung (140), das Einführen eines aerosolerzeugenden Artikels (2), das Empfangen einer Benutzereingabe und/oder das Zuführen von externer Leistung während einer bestimmten Zeitperiode umfasst.

3. Aerosolerzeugende Vorrichtung (100) nach Anspruch 1, die ferner eine Heizvorrichtung (140) umfasst, die konfiguriert ist, einen aerosolerzeugenden Artikel (2) zu erhitzen,
wobei dann, wenn das Erhitzen der Heizvorrichtung (140) nicht während einer ersten Zeitperiode durchgeführt wird, die Steuereinrichtung (110) in die zweite Leistungsbetriebsart schaltet.

4. Aerosolerzeugende Vorrichtung (100) nach Anspruch 1, die ferner eine Einführungserfassungseinheit umfasst, die konfiguriert ist, eine Einführung eines aerosolerzeugenden Artikels (2) zu erfassen,
wobei dann, wenn die Einführung des aerosolerzeugenden Artikels (2) während einer zweiten Zeitperiode von der Einführungserfassungseinheit nicht erfasst wird, die Steuereinrichtung (110) in die zweite Leistungsbetriebsart schaltet.

5. Aerosolerzeugende Vorrichtung (100) nach Anspruch 1, die ferner eine Eingabeeinheit (150) umfasst, die konfiguriert ist, eine Benutzereingabe zu empfangen,
wobei dann, wenn während einer dritten Zeitperiode keine Benutzereingabe durch die Eingabeeinheit (150) empfangen wird, die Steuereinrichtung (110) in die zweite Leistungsbetriebsart schaltet.

6. Aerosolerzeugende Vorrichtung (100) nach Anspruch 1, die ferner eine Schnittstelleneinheit (160) umfasst, die konfiguriert ist, externe Leistung zu empfangen,
wobei dann, wenn die verbleibende Ladung der Batterie (130) unterhalb eines voreingestellten Niveaus ist und während einer vierten Zeitperiode keine externe Leistung zugeführt wird, die Steuereinrichtung (110) in die zweite Leistungsbetriebsart schaltet.

7. Aerosolerzeugende Vorrichtung (100) nach Anspruch 1, wobei dann, wenn eine zweite Betriebsartumschaltbedingung erfüllt ist, während die Steuereinrichtung (110) nicht mit Leistung versorgt wird, die Leistungsversorgungseinheit (120) in die erste Leistungsbetriebsart schaltet.

8. Aerosolerzeugende Vorrichtung (100) nach Anspruch 7, wobei die zweite Betriebsartumschaltbedingung den Empfang einer Benutzereingabe und/oder die Zufuhr von externer Leistung umfasst.

9. Verfahren zum Betreiben einer aerosolerzeugenden Vorrichtung (100), wobei das Verfahren Folgendes umfasst:
Zuführen von Leistung von einer Batterie (130) zu einer Steuereinrichtung (110) entsprechend einer ersten Leistungsbetriebsart, wobei die erste Leistungsbetriebsart eine Bereitschaftsbetriebsart ist, die ein Leistungssparbetriebsart ist;
Bestimmen durch die Steuereinrichtung (110), ob eine erste Betriebsartumschaltbedingung erfüllt ist; **dadurch gekennzeichnet, dass**
dann, wenn die erste Betriebsartumschaltbedingung erfüllt ist, von der ersten Leistungsbetriebsart zu einer zweiten Leistungsbetriebsart, die ein Transportbetriebsart ist, in der die Leistungsversorgung der Steuereinrichtung (110) blockiert ist, geschaltet wird.

10. Computerlesbares Speichermedium, auf dem ein Programm zum Ausführen des Verfahrens nach Anspruch 9 auf einer Vorrichtung nach einem der Ansprüche 1-8 durchgeführt wird, gespeichert ist.

## Revendications

1. Dispositif de production d'aérosol (100) comportant :
une batterie (130) ;
une unité de fourniture d'énergie (120) configurée pour commander une fourniture d'énergie de la batterie (130) ; et
une commande (110) configurée pour, lorsque qu'une première condition de changement de mode est satisfaite, commander l'unité de fourniture d'énergie (120) de telle sorte que le dispositif de production d'aérosol (100) passe d'un premier mode d'alimentation dans lequel de l'énergie est fournie à la commande (110), à un second mode d'alimentation dans lequel aucune énergie n'est fournie à la commande (110), **caractérisé en ce que**
le premier mode d'alimentation est un mode d'attente qui est un mode d'économie d'énergie, et le second mode d'alimentation est un mode d'expédition qui est un mode dans lequel l'énergie fournie à la commande (110) est bloquée.

2. Dispositif de production d'aérosol (100) selon la revendication 1, dans lequel la première condition de changement de mode comporte au moins une action parmi le chauffage d'un élément chauffant (140), l'insertion d'un article de production d'aérosol (2), la réception d'une entrée d'utilisateur et la fourniture d'énergie externe, pendant une période de temps désignée.

3. Dispositif de production d'aérosol (100) selon la revendication 1, comportant en outre un élément chauffant (140) configuré pour chauffer un article de production d'aérosol (2),
dans lequel, lorsqu'un chauffage de l'élément chauffant (140) n'est pas effectué pendant une première période de temps, la commande (110) passe au second mode d'alimentation.

4. Dispositif de production d'aérosol selon la revendication 1, comportant en outre une unité de détection d'insertion configurée pour détecter une insertion de l'article de production d'aérosol (2),
dans lequel, lorsqu'une insertion de l'article de production d'aérosol (2) n'est pas détectée par l'unité de détection d'insertion pendant une deuxième période de temps, la commande (110) passe au second mode d'alimentation.

5. Dispositif de production d'aérosol (100) selon la revendication 1, comportant en outre une unité d'entrée (150) configurée pour recevoir une entrée d'utilisateur,
dans lequel, lorsqu'aucune entrée d'utilisateur n'est reçue par l'intermédiaire de l'unité d'entrée (150) pendant une troisième période de temps, la commande (110) passe au second mode d'alimentation.

6. Dispositif de production d'aérosol (100) selon la revendication 1, comportant en outre une unité d'interface (160) configurée pour recevoir de l'énergie externe,
dans lequel, lorsqu'une charge restante de la batterie (130) est inférieure à un niveau prédéfini et que l'énergie externe n'est pas fournie pendant une quatrième période de temps, la commande (110) passe au second mode d'alimentation.

7. Dispositif de production d'aérosol (100) selon la revendication 1, dans lequel, lorsqu'une seconde condition de changement de mode est satisfaite alors qu'aucune énergie n'est fournie à la commande (110), l'unité de fourniture d'énergie (120) passe au premier mode d'alimentation.

8. Dispositif de production d'aérosol (100) selon la revendication 7, dans lequel la seconde condition de changement de mode comporte au moins une action parmi la réception d'une entrée d'utilisateur et la fourniture d'énergie externe.

9. Procédé de fonctionnement d'un dispositif de production d'aérosol (100), le procédé comportant les étapes consistant à :
fournir de l'énergie correspondant à un premier mode d'alimentation à une commande (110) à partir d'une batterie (130), dans lequel le premier mode d'alimentation est un mode d'attente qui est un mode d'économie d'énergie ;
déterminer, par la commande (110), si une première condition de changement de mode est satisfaite ; **caractérisé en ce que**
lorsque la première condition de changement de mode est satisfaite, passer du premier mode d'alimentation à un second mode d'alimentation qui est un mode d'expédition dans lequel l'énergie fournie à la commande (110) est bloquée.

10. Support d'enregistrement lisible par ordinateur sur lequel est stocké un programme destiné à exécuter le procédé de la revendication 9 sur un dispositif selon l'une quelconque des revendications 1 à 8.
